# EUROPEAN PATENT SPECIFICATION

(11) **EP 2 823 946 B1**
(45) Date of publication and mention of the grant of the patent: **17.05.2017**
(21) Application number: 12870659.5
(22) Date of filing: 08.03.2012
(51) Int. Cl.: B29C 39/10, B29C 33/00, B29C 39/24, B29C 39/26, F16B 33/00, F16B 37/14, B29C 33/30, B64D 45/02, B29K 23/00, B29C 33/10

(54) **BELL-SHAPED MOULD FOR ENCAPSULATING ARTICLES WITH A MOULDABLE SEAL**
GLOCKENFÖRMIGE FORM ZUM EINKAPSELN VON ARTIKELN MIT EINER FORMBAREN DICHTUNG
MOULE EN FORME DE CLOCHE POUR ENCAPSULER DES ARTICLES AVEC UN MATÉRIAU D'ÉTANCHÉITÉ MOULABLE

(43) Date of publication of application: 14.01.2015
(73) Proprietor: Jurblami, S.L., 28018 Madrid (ES)
(72) Inventor: MARTINEZ MARIN, Juan Manuel, E-28018 Madrid (ES)
(74) Representative: Sanchez del Campo Gonzalez de Ubierna, Ramón
(86) International application number: PCT/ES2012/070151
(87) International publication number: WO 2013/132115

(56) References cited:
- EP-A1- 0 181 483
- EP-A1- 1 837 085
- EP-A1- 1 837 085
- EP-A2- 1 872 863
- WO-A1-01/42689
- ES-T3- 2 236 033
- ES-T3- 2 261 720
- US-A- 2 694 987
- US-A- 4 519 974
- US-A- 4 923 348
- US-B1- 6 273 658

## Description

### OBJECT OF THE INVENTION

The invention, as expressed in the heading of this specification, relates to a bell-shaped mould for encapsulated articles with mouldable seal, which contributes to the function destined to have several advantages and characteristics of novelty, which shall be described In detail below and which involve a remarkable improvement over the systems currently known for the same purpose.

More in particular, the object of the invention focuses on a bell-shaped mould and that, being of the so-called of two pieces, is aimed at encapsulation of rivets or screws with viscous materials as sealants and silicones of one or two components that, once cured, provide a solid tight sealing coverage protecting against humidity and corrosion, with the particularity of having an innovative structural design that, amongst other advantages, on the one hand, enhances the robotic application of the components of sealing material, allowing a strict, precise control of the product amounts to be applied and, on the other hand, establishes a safe coverage with a completely smooth surface, without pores, which prevents the creation of fungi and bacteria that can cause corrosion.

### FIELD OF APPLICATION OF THE INVENTION

The field of application of this invention is framed within the technical industrial sector, covering in general any industry dealing with the manufacture of machines or apparatus with screws and rivets requiring encapsulation for sealing, such as the aeronautic, railroad, shipyard industries, etc., focusing in particular on the scope of encapsulated articles by mouldable sealant.

### BACKGROUND OF THE INVENTION

As a reference to the current state of the art, it must be noted that the technique of sealing screws and rivets by adding to them a sealing material coverage made by inserting the material in a mould that, before it forges, is placed over the rivet or screw and, once cured, is removed.

However, the appl cant does not know the existence of any other bell mould or similar invention that shows technical, structural and constitutive characteristics similar to those herein discussed, and the details characterising it are duly collected in the final claims enclosed to this specification thereof.

Document EP 0 181 483 discloses a method and apparatus for applying a uniform sealant coating over the portion of a rivet, bolt, fastener or other element exposed above a surface. The sealant coating prohibits corrosion, provides electrical insulation and seals the fastener and the surrounding area. The method provides for applying a cup-shaped molding shell over the exposed portion of the fastener or other element to be sealed and into contact with the panel or other surface to which the fastener is attached. Sealant is injected into the interior cavity of the molding shell such that the space between the fastener or object and the interior cavity of the molding shell is filled with sealant. The sealant is allowed to cure, and the molding shell is removed.

Document EP 1872 863 discloses an adaptable capsule device. It is a 'one-piece-only' device and has the advantage of adapting the 'mouthpieces'; you only have to change the adaptable capsule in case the measure of the rivets and screws had different measure. By this way, you only have to use one 'mouthpiece', with the possibility of exchanging it for other different adaptable capsules and get large series of riveting without skipping the other measures (other kind of rivets and screws); you will get the in capsule, we mean you could avoid skipping rivets with different measure only changing the adaptable device, to avoid forgetting any screw during the process.

Document US 6 273 658 discloses an enclosure that encompasses and protects a lug and lug nut extending from a wheel hub. Structurally, the enclosure comprises an end wall, a surrounding side, a snap on end cap, and a lug opening or port formed in the end wall. When installed, the lug extends through the lug opening and supports the enclosure while the end wall lies exteriorly of the lug nut and the surrounding side is spaced from the lug nut but generally encompasses and surrounds the lug nut and the lug. Prior to enclosing the enclosure by snapping on the end cap, the enclosure is filled at least partially with a grease or lubricant.

Document EP 1837 085 discloses a hood to applicate silicones or sealing materials that has been designed for the purpose of protecting rivets and screws against corrosion (the most dangerous enemy of aviation). This device can adapt every cartridge we can find within the market by a thread. Its size also can be adapted to every size of different rivets and screws, giving it the perfect form to adjust it to those rivets and screws. It comprises a conic 'mouth piece' with a 'small bell' at its end and is a tool to in capsule (cloak) making a capsule of sealing material or silicone and covering these rivets and screws to isolate them from humidity of water, hydraulic fluids, etc. It has been thought like a disposable device, because of its low cost and of safety and hygienically working. It has the advantage, against other similar devices within the market, it is a one-piece-only' tool, so you can't separate it by manipulation during the work, like in other cases.

Finally, document WO 01/42689 discloses a support for storing, transporting and using devices for applying a sealing compound onto an element projecting on a surface. It is characterized in that it comprises a plurality of said devices borne by a substantially planar base plate and wherefrom the latter can be detached, and each device includes a cap designed to cover entirely said element and containing a predetermined amount of sealing compound in frozen state. The invention is useful for producing impermeability to fluids at rigid connecting elements such as rivets, bolts or the like, for protecting projecting elements of structures against electromagnetic effects such as lightning.

### EXPLANATION OF THE INVENTION

Specifically, the invention proposes, as pointed out above, a bell-shaped mould for rivets and screws.

According to an embodiment of the invention, the mould discussed is arranged grouped forming a nozzle grid cluster with the shape of inverted bells, with the planned existence of support legs in the edges and in the middle part of this grid to enhance levelling on a bench and thus enable an automatic filling machine with a filler to fill them, one by one or in rows, with the scheduled amount of material so that all bells have exactly the same amount and thus all encapsulated articles will have the same amount of sealant and are identical, firm and uniform.

Logically, the nozzles or bells can be also filled with a manual extrusion gun, which is the conventional method.

According to another embodiment of the invention, the bell mould or grid is preferably made of plastic, PE (polyethylene) or PP (polypropylene) material, of phosphorescent colour, so that it can be seen in the dark. This is because, thanks to this material, once lightening is removed, phosphorescence is activated and reflected in the dark and thus, as it is lightening in the dark, it can be easily and quickly detected if any mould to be removed of the screws or rivets is forgotten, once the material is cured, for instance inside a plane fuel tank.

In addition, the proposed mould has the advantage over other types of existing encapsulation systems, that its application is direct and that, once the components have been mixed, the material starts its polymerisation or drying, so there is no need for ultra-freezing as with other systems where handling and distribution is very difficult, as the sealant to be used for encapsulation, first are moulded in special moulds for distribution to the companies that will use them and they must be stored in special chambers and special transport, since, once the two components have been mixed, it must be applied immediately or frozen to stop the polymerisation or curing process, which makes the process more expensive and in many cases makes it unfeasible.

Another advantage of the mould of the invention is that, once it has been placed and while the sealing material forges, the work to assemble the machine or apparatus where it is applied can be continued, such as drilling, deburring, etc. as the bell mould protects the sealing encapsulation from shavings, dust or other contaminants that can fall over the sealant.

Furthermore, it must be also highlighted that the proposed mould can be recovered and, therefore, reused, as when the bell is unmoulded it is seen to be clean, leaving, on the other hand, a fully smooth sealing moulding, which enables a finish of encapsulation of rivets and screws without pores or rough forms that give an antiaesthetic appearance to it.

Specifically dealing with the particular configuration of the bell mould, it must be noted that, in addition to a nozzle or nozzle ending in a tapered skirt giving it a bell shape, it has been designed to place in the edge thereof a flat rim to achieve full support and make it safer. At the opposite side, the mould has a stem joined to the nozzle which makes handling easier, which has a venting hole crossing it.

This hole is used for air release and to insert a sword-shaped guide into it. This sword is fitted with a tip that, before placing the mould on the screw or rivet, is fitted over it for centering it. Furthermore, this sword is fitted with slits to make air release easier, that can be found in the sealant when the bell is filled. Giving minor turns to the right and left while pressing to reach the base of the rivet or bolt with the flat side of the bell mouth, once the mould is placed, the sword of the rod is removed, leaving the mould placed until the sealing material is forged.

It must be also stressed that the rod in the mould nozzle is preferably round, though it can have different shapes, for instance, star, hexagonal, etc., and it's used for handling it and for making unmoulding easier.

Therefore, the invention of the bell mould is aimed at getting the encapsulated articles to be perfect, fully homogeneous and uniform and also achieving precision measures which are reduced to millimetre tens, as with conventional systems the working tolerances are of up to 5 m/m, while with the mould discussed herein the tolerances are of millimetre tens. This makes it be configured as an engineering part and optimum method to make a sealant that in addition to precise and fully tight, ensuring full tightness, allows weight to be saved, which, for instance, in the case of aviation is very important, as many grams of many encapsulated articles can involve an extra ballast.

The main difference from other techniques known in the state of the art to perform encapsulated articles is the application of the sealant that can be done automatically or manually, with a sealant filling gun or with a syringe.

The process consists of inserting the necessary material of sealant inside the nozzle of the bell, which will have a different size depending on the dimensions of the rivet or bolt. The amount of sealant necessary for encapsulation to be performed is applied. The capsule is placed in front of the rivet first pointing with the sword-shaped guide in the screw or rivet hole and then fitting the bell on the screw or rivet leaving it sunk in sealant and ensuring that the flat edge thereof is adjusted over the surface of the part around the screw or rivet. Giving small turns to the right and left of the bell, while pressing, it allows the air that may be contained in the sealing material to leave through the through-hole of the rod where the guide has been inserted and through the slits thereof. Once the base thereof has been reached, we remove the guide and leave the mould until the sealant is forged. After drying or curing the sealant, after a few hours, we unmould the bell separating it from the sealant that is solidified, with a perfect finished, without pores, with shine and giving a spectacular aesthetic appearance, in particular in visible areas. And most importantly, protecting against corrosion, which is the big enemy of aviation, automotion, ships and railroads.

In addition, this system, as it can be mechanised, enables us to calculate the exact amount of sealant applied to each rivet and know at each time the amount of sealant that is used in the whole apparatus or machine where it is applied.

Based on the above, it is verified that the above-described bell mould for encapsulated articles with mouldable sealant means an innovation of unknown characteristics to date for that purpose, reasons which, together with its practical value, give it sufficient grounds to obtain the privilege of exclusivity requested.

### DESCRIPTION OF THE DRAWINGS

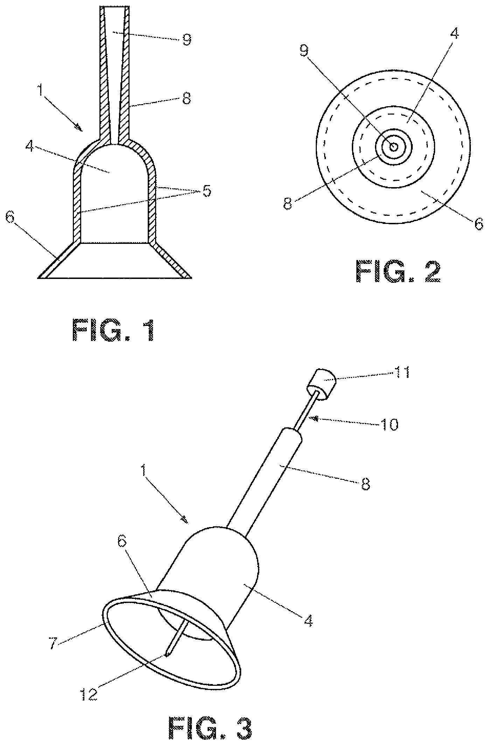

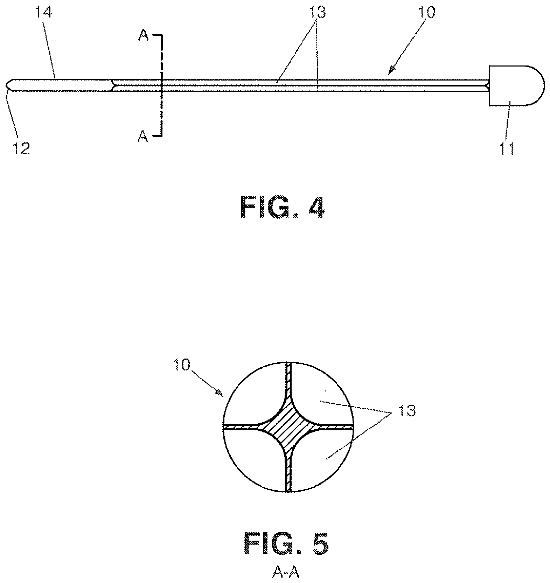

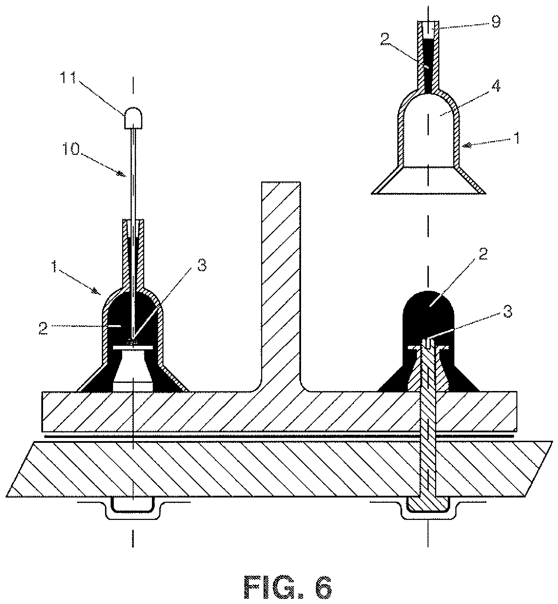

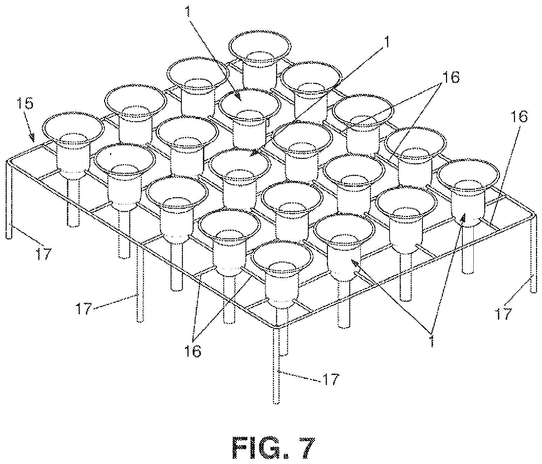

To complement the description made of the invention and to help for a better understanding of the characteristics distinguishing it, this specification encloses, as an integral part thereof, a set of plans, where, by way of illustration and without limitation, the following is represented:
Figure number 1.- It shows a sectioned elevation view of an example of an embodiment of bell mould for encapsulated articles with mouldable sealant object of the invention, noticing in it the configuration thereof and parts it comprises.
Figure number 2.- It shows a plan view of the mould, according to the invention, shown in the above figure.
Figure number 3.- It shows a perspective view of the mould of the invention, represented in this case with the centering sword fitted in it.
Figure number 4.- It shows an elevation view of the centering sword, noticing the grip thereof and the slits that provide air release.
Figure number 5.- It shows a sectional view of the sword, according to the section A-A noted in figure 4.
Figure number 6.- It shows a sectional view of a part with rivets to which encapsulations have been performed with the mould of the invention, noticing in it how this mould is applied over the rivets to achieve said encapsulated articles.
Figure number 7.- It shows a perspective view of the bell mould for encapsulated articled with mouldable sealant object of the invention, grouped in the grid with support legs enabling mechanisation
Figure number 8 and 9,- They show a sectional and plan view, respectively, of the mould grid, according to the invention shown in Figure 7.

### PREFERRED EMBODIMENT OF THE INVENTION

In view of the abovementioned figures, and according to the numbering adopted, it can be noticed in them an example of preferred embodiment of the invention, which comprises the parts and elements described in detail below.

Furthermore, as shown in these figures, the mould (1) involved is configured from a solid part of plastic material, preferably of plastic phosphorescent PE or PP material, of bell-shaped configuration applicable for including mouldable sealing material (2) for encapsulating screws or rivets (3), which is configured from a nozzle (4) of vertical walls (5) that are extended and open in a perimetral visor (6) in the edge of which a flat rim (7) has been planned, that provides full support of the mould over the part surface where the screw or rivet emerges (3) over which the encapsulation is implemented.

On the opposite side to that described in the visor (6), the mould has a stem (8), that can be of round section or of any other configuration, to which a through-bore (9) has been performed that preferably is of conical configuration, and slightly wider in the distal part of the stem than in the part joining it to the nozzle (4).

This through-bore (9) is for allowing the insertion in it of a centering guide (10), which consists, as shown in Figures 4 and 5, of a sword-shaped elongated body fitted in its edge with a handling knob (11) to make it easier to insert the drill, and, in particular, to make extraction easier, having in the opposite side a rounded tip (12) that, for achieving centering of the mould, is inserted over a hallow planned in the head of the screw or rivet (3).

This guide (10) also has a number of slits (13) which allow for an air outlet, that may contain the sealing material (2), which is achieved moving it slightly once entered into the through-bore (9) of the rod (8) and when the mould is already placed with the tip of the guide fixed over the screw or rivet.

These slits (13) of the guide (10), as shown in Figures 4 and 5, consist preferably of a cross-sectional configuration of the sword-shaped body of the guide, which covers most of it, except for the handling knob (11) and the end (14) prior to the tip (12) which is solid.

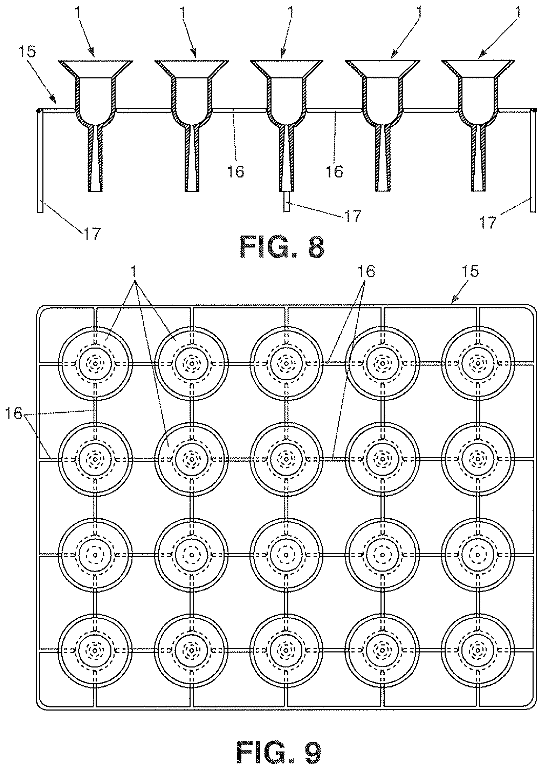

According to Figures 7, 8 and 9, it is seen how mould (1) is arranged grouped forming a grid (15) or a cluster of multiple moulds (1) joined by joining segments (16) and located with the nozzle (4) of the bell upside down, i.e., with the opening of the visor (6) oriented upwards to make automatic filling thereof easier, previously planning the existence of some support legs (17), located in the edges and in the central part of said grid (15), which allows to level the set of moulds over a bench.

## Claims

1. Bell-shaped mould for encapsulating articles with a mouldable seal, of the type formed by a plastic material applicable for encapsulation of screws or rivets (3) with viscous sealing materials (2) as silicones of one or two components that, once cured, form a protecting coverage; wherein said mould is configured from a part comprising a nozzle (4) with vertical walls (5) extending in a perimetral visor (6) in the edge of which a flat rim (7) has been placed, wherein the side opposite to said perimetral visor (6) has a stem (8) where a through-bore (9) has been performed **characterized in that** a centering guide (10) is inserted in the said through-bore (9); and wherein the centering guide (10) is fitted with slits (13), which allows for an air outlet for the air that may be contained in the sealing materials (2); and wherein the centering guide (10) consists in a sword-shaped elongated body fitted in an edge with a handling knob (11), while in the opposite side it shows a rounded tip (12) that is suitable for the insertion in the screw or rivet (3).

2. Bell-shaped mould according to claim 1 wherein the through-bore (9) of the stem (8) has a conic configuration and is slightly wider in the distal part of the stem than in the part joining it to the nozzle (4).

3. Bell-shaped mould according to claim 1 wherein the slits (13) of the centering guide (10) consists of a cross-section configuration of the sword-shaped body of said centering guide (10), covering most of it, except for the knob (11) and the edge (14) before the tip (12), where it is solid.

4. Bell-shaped mould according to any of claims 1-3 wherein it is arranged to form a grid (15) of multiple mould units (1) joined by joining segments (16) and located with the nozzle (4) oriented upwards, fitted with support legs (17), located in the edges and in the central part of this grid (15) for levelling the set.

5. Bell-shaped mould according to any of claims 1-4, wherein it is performed in plastic phosphorescent PE or PP material.

## Patentansprüche

1. Glockenförmige Form zum Einkapseln von Artikeln mit einer formbaren Dichtung, der Art gebildet aus einem Kunststoffmaterial, welches für die Einkapselung von Schrauben oder Nieten (3) mit viskosen Dichtungsmaterialien (2) wie Siliconen aus einem oder zwei Komponenten anwendbar ist, welche, nach erfolgter Aushärtung, eine Schutzabdeckung bilden; wobei die genannte Form aus einem Teil gebildet ist, umfassend eine Düse (4) mit senkrechten Wänden (5), welche sich bis zu einem perimetrischen Schutzschild (6) erstrecken, wobei auf der Kante desselben ein flacher Rand (7) platziert worden ist, wobei die zum genannten perimetrischen Schutzchild (6) gegenüberliegende Seite einen Schaft (8) aufweist, in welchem eine Durchgangsbohrung (9) durchgeführt worden ist, **dadurch gekennzeichnet, dass** eine Zentrierführung (10) in die genannte Durchgangsbohrung (9) eingeführt ist; und wobei die Zentrierführung (10) mit Schlitzen (13) ausgestattet ist, was einen Austritt der gegebenenfalls im Dichtungsmaterial (2) enthaltenen Luft erlaubt; und wobei die Zentrierführung (10) aus einem schwertförmigen länglichen Körper besteht, welcher in einer Kante mit einem Handhabungsgriff (11) ausgestattet ist, während er auf der gegenüberliegenden Seite eine abgerundete Spitze (12) zeigt, welche für die Einführung in die Schraube oder Niete (3) geeignet ist.

2. Glockenförmige Form nach Anspruch 1, wobei die Durchgangsbohrung (9) des Schafts (8) eine konische Ausbildung aufweist und leicht breiter im distalen Teil des Schafts ist, als im Teil, welcher sie mit der Düse (4) verbindet.

3. Glockenförmige Form nach Anspruch 1, wobei die Schlitze (13) der Zentrierführung (10) aus einer Querschnittsausbildung des schwertförmigen Körpers der genannten Zentrierführung (10) bestehen, welche das meiste davon decken, außer dem Griff (11) und der Kante (14) vor der Spitze (12), wo sie massiv ist.

4. Glockenförmige Form nach einem der Ansprüche 1-3, wobei sie derart angeordnet ist, dass sie ein Gitter (15) aus mehrfachen Formeinheiten (1) bildet, welche mittels Verbindungssegmente (16) verbunden sind und mit der Düse (4) nach oben orientiert angeordnet sind, sie mit Stützbeinen (17) ausgestattet ist, welche sich in den Kanten und im Mittelteil dieses Gitters (15) befinden, um das Aggregat waagerecht auszurichten.

5. Glockenförmige Form nach einem der Ansprüche 1-4, wobei sie aus phosphoreszierendem PE- oder PP-Kunststoffmaterial hergestellt ist.

## Revendications

1. Moule en forme de cloche pour encapsuler des articles avec un matériau d'étanchéité moulable, du type formé par une matière plastique applicable à l'encapsulation de vis ou de rivets (3) avec des matériaux d'étanchéité visqueux (2) comme les silicones d'un ou deux composants qui, une fois durcis, forment une couverture de protection ; dans lequel ledit moule est configure à partir d'une partie comprenant une buse (4) avec des parois verticales (5) s'étendant sur une visière périmétrale (6) dans le bord de laquelle a été mise en place un rebord plat (7), dans lequel le côté en regard de ladite visière périmétrale (6) a une tige (8) où un trou traversant (9) a été réalisé **caractérisé en ce qu'**un guide de centrage (10) est inséré dans le trou traversant (9); et dans lequel le guide de centrage (10) est équipé d'entailles (13), qui permet une sortie d'air pour l'air qui peut être contenu dans le matériau d'étanchéité (2); et dans lequel le guide de centrage (10) consiste en un corps allongé en forme d'épée mise en place sur un bord avec un bouton de manipulation (11), tandis que du coté opposé montre une pointe arrondie (12) qui est appropriée pour l'insertion dans la vis ou le rivet (3).

2. Moule en forme de cloche selon la revendication 1 dans lequel le trou traversant (9) de la tige (8) a une configuration conique et est légèrement plus large dans la partie distale de la tige que dans la partie la reliant à la buse (4).

3. Moule en forme de cloche selon la revendication 1 dans lequel les entailles (13) du guide de centrage (10) consistent en une configuration de section transversale du corps en forme d'épée dudit guide de centrage (10), couvrant la plupart de celui-ci, à l'exception du bouton (11) et du bord (14) avant la pointe (12), où il est solide.

4. Moule en forme de cloche selon l'une quelconque des revendications 1-3 dans lequel il est dispose pour former une grille (15) à plusieurs unités de moules (1) reliées par des segments de liaison (16) et située avec la buse (4) orienté vers le haut, équipé de pattes de support (17), situées sur les bords et sur la partie centrale de cette grille (15) pour niveler l'ensemble.

5. Moule en forme de cloche selon l'une quelconque des revendications 1-4, dans lequel il est réalisé en matière de PE ou PP de plastique phosphorescent.
